# EUROPEAN PATENT SPECIFICATION

(11) **EP 0 877 779 B1**
(45) Date of publication and mention of the grant of the patent: **13.10.1999**
(21) Application number: 97902500.4
(22) Date of filing: 07.02.1997
(51) Int. Cl.: C09D 5/16, B63B 1/38

(54) **COATING FORMULATION**
BESCHICHTUNGSZUSAMMENSETZUNG
FORMULATION DE REVETEMENT

(30) Priority: 07.02.1996 GB 9602602; 07.09.1996 GB 9618707
(43) Date of publication of application: 18.11.1998
(73) Proprietor: PROTECTIVE RESEARCH INDUSTRIES LIMITED, Coatbridge ML5 4LY (GB)
(72) Inventor: STARK, Ian, Strachan, Edinburgh EH3 6PT (GB); FREW, Jeremy, George, McKenzie, Edinburgh EH11 3NW (GB)
(74) Representative: Pacitti, Pierpaolo A.M.E.
(86) International application number: GB9700349
(87) International publication number: WO9729157

(56) References cited:
- EP-A- 0 616 940
- US-A- 3 973 510

## Description

The present invention relates to a coating or a surface modification for substrates used in aqueous or fluid environments such as sub-sea structures. More particularly, the invention relates to a coating or surface modification which can control the physical and chemical properties of various substrates in contact with aqueous or fluid environments.

Several problems are encountered in the use of substrates in contact with aqueous or fluid environments, and in particular in substrates used in sub-sea structures.

Particular problems include growth of marine or other fouling organisms such as algae, plant life or crustaceans on the substrate and thus the creation of a bio-net environment over the substrate.

Other problems are associated with the loss in energy from the fluid flow over a given substrate due to hydrodynamic drag coefficient properties intrinsic to the individual fluid flow/substrate interface.

These factors affect the hydrodynamic drag coefficient properties of fluid over the substrate, for example, altering the hydro-dynamic properties of the substrate in an aqueous system. Also, they can affect the water repellent properties of the substrate and other chemical and/or physical properties such as corrosion resistance, thermal stability and structural properties.

Attempts have been made to control fouling. Traditional anti-fouling techniques have involved the use of toxic materials to kill any organisms which grow or are deposited onto the substrate. Typical materials used are biocides, fungicides, Tri-butyl tin, Cuprous Oxide, Antimony Oxide, Molybdenum Disulphide and lead complexes. These are commonly known as leaching processes. However, such materials have a severe ecological impact.

Hydro-dynamic properties of substrates are traditionally controlled in a number of ways. For example, self polishing coatings are known which are formulated to wear away or erode with time and friction to keep the surface at an acceptable level of hydrodynamic drag co-efficient.

Coatings may be formulated with an inclusion of defrictionizing aids such as silanes, teflon and Shell's Epikote-Coal Tar resin systems which are commercially available.

Also, water repellent properties can be improved by incorporating waxes, silanes, siloxanes, silicon molecules and modified resins into the substrate.

Corrosion resistance is traditionally achieved using techniques such as corrosion resistant resins (i.e. epoxy, vinyl ester etc), zinc rich sacrificial primers, phosphorus and chromate derivatives and toxic acid within the substrate.

Each of these approaches aims to improve the chemical and/or physical properties of a substrate, in terms of corrosion resistance, thermostability and structural properties but do not take into effect the ecological impact on the marine environment. Prevention and control of the formation of a bio-net is usually attained by the use of toxic materials.

US-A-3973510 discloses the use of hydrophobic silica in a formulation which aims to reduce drag between the hull surface and the water. Marine growth is inhibited only by the addition of toxic chemicals such as copper complexes of polyethylene-imine. The hydrophobic silica is untreated and is not fumed.

EP-A-0616940 discloses a mechanical means (eg a nozzle) for supplying moving air to the surface of a hull. The hull may be coated with a resin and silica particles.

It is an object of the present invention to provide a coating formulation or surface modification for use on or in respect of substrates to be placed in an aqueous or fluid environment whereby the properties of the substrate which make it suitable for use in this environment are maintained or improved with negligible ecological impact.

According to the present invention there is provided a formulation suitable for coating or modifying the surface of a substrate to be situated in an aqueous environment, wherein the formulation comprises from 1% to 90% fumed, treated hydrophobic silica by weight and from 1% to 90% hydro-carbon resin by weight, and wherein the formulation is capable of entrapping a micro layer of air between the substrate and the aqueous environment.

Preferably the formulation comprises of a structure of micro-particles, semi or semi-permeable foams or membrane, micro filaments, or combinations of any or all or the above which entrap the gas or vapour between the aqueous or fluid environment and the substrate. Typically the surface chemistry of the formulation is such that when coated on a substrate it can control the surface tension between the fluid environment, the formulation structure and a substrate.

The formulation can be attached to the substrate by physical or chemical means or via a combination of physical and chemical means. Substrates can include resin composites, metal, wood, steel, aluminium, concrete, natural rock, thermosetting plastic, and rubber based substrates. These substrates can be pretreated with primers to help adhesion of the microparticles. A typical primer coating would be an epoxy based anti-corrosion primer used to prime mild steel substrates.

Suitably the formulation can comprise of micro-particles chosen from the group containing:
pyrogenic metal oxides such as fumed silica, fumed alumina, fumed caesium, fumed zirconia, fumed titania, fumed itrium, fumed chromium, fumed tin, fumed molybdenum oxides and fumed vanadium oxide;
carbon black or channel black pigment particles;
finely ground inorganic or organic particles such as talc, mica, bentones, calcium carbonate, iron and lead oxides; and
precipitated particles such as precipitated silicon dioxide, silica, aluminium silicates and titanium dioxides, silica based particles such as hydrogels, solgels or aerogels, and synthetic resin based particulate products such as Pergopack.

Hydrophillic micro-particles, foams or micro-filaments can also be used. These can be treated to create the surface tension or hydrophobicity required to entrap the gaseous phase between the substrate and the fluid phase. Treatment can be done prior to, during or after application to the substrate.

Suitably also, the formulation can comprise of porous or semi-porous foams or membranes that could be created using a polyurethane moisture curing resin that is foamed and treated to create the required surface tension or hydrophobicity to promote the gas or vapour phase entrapment.

Suitably also, the formulation can comprise of micro-filaments that mimic the behaviour of either bird feathers or animal fur to entrap air. These micro-filaments can be made from organic or inorganic materials, such as glass or plastic.

Typically the surface energy of the structure of the formulation may be adapted by controlling the hydrophobicity of the structure. This can be done prior to, during or after the application of the coating or surface modification to the substrate.

Preferably the micro-particles, foam or micro-filaments are treated with agents chosen from the group comprising natural and synthetic waxes, siloxanes, fluoro-silanes, reactive silanes, silicon oils, organosilanes, organo-titaniate compounds, other silicon and hydrocarbon based materials or blends of the above. These treatments can occur during, prior to or after the application of the coating or surface modification to the substrate.

Suitable commercially available modified micro-particles include Aerosil R202, Aerosil R974, Aerosil R805, HDK H2000, Sypernat D10, Syloid ED 60, Neosyl and Aerosil R504, Bayer Titan Products, Winofil, Bentones, sementoius clays, Laponites, Pergopack, Aluminium Oxide C, Titanium Oxide P25, etc.

In one particular embodiment, the formulation comprises of a dispersion of a treated fumed silica in a blend of solvents, and/or water and/or additives. The additives would be used to improve the performance of the coating or surface modification. Such additives could be catalysts, adhesion promoters, fungicides, hardener, biocides, reactive silanes, surface tension modifiers and corrosion inhibitors. The composition of the solvent/water/additives dispersion could vary depending on the choice of substrate. A dispersion of a treated fumed silica in water and a range of similar additives could also be used. This coating can be applied to a partially or fully cured primer coating on a metal substrate. A typical primer coating could be an epoxy based coating.

In an alternative embodiment, the formulation comprises use of a treated fumed silica blended with a hydro-carbon resin wherein the hydro-carbon resin bonds the silica to a substrate surface. Additives as described above can also be used to improve the hydrophobic performance of the coating or surface modification.

Preferably the fumed silica is prepared from highly dispersed amorphous silicon dioxide treated with dimethyldichlorosilane, hexamethyldisilazane or polymethylsiloxane or composite hydrophobic treatments.

Preferably the bonding resin is an epoxy, a polyurethane, a polyester, a vinylester, an acrylic or composites of the above.

The bonding resin may be a powder or in a selected solvent/resin solution. The microparticles can be coated onto the substrate held in a solvent blend or aqueous dispersion. The bonding of the microparticles can be improved by further treating it with other chemical compounds that aid adhesion by either chemical, electrostatic or physical means. An example of this could be treating a hydrophobic fumed silica with an Amino Silane or an Organotitanate or blends to improve chemical adhesion to an epoxy resin based coated substrate. A commercial product would be Aerosil R504.

The coating formulation comprises from 1% to 90% fumed, treated hydrophobic silica.

The coating formulation comprises from 1% to 90% hydro-carbon resin.

The formulation can also be applied directly to a partially cured, uncured, pre-vulcanised, post-vulcanized or thermosetting substrate. An example would be passing a heated thermosetting plastic coated wire through a bath of a dry silica or a dispersion containing silica.

The invention further provides a process for coating a substrate, the process comprising the steps of heating the selected coating formulation according to the invention to between 50°C - 300°C and depositing the composition on to the substrate.

Alternatively, the invention provides a process for coating a substrate, the process comprising the steps of preheating the substrate and depositing the selected coating formulation according to the invention on to the substrate.

For hydro-carbon oil fluid systems oleophobic treatments such as fluorine derivatives may be used to entrap the required gas or vapour. These are of specific value in oil/water systems. Similar delivery and bonding mechanisms can be used as described previously.

In an alternative embodiment of the invention, a metallised coating may be used.

Amongst others, any or all of zinc, aluminium and nickel metals may be used.

The invention further comprises a process for coating a substrate with a metallised coating, the process comprising heating a blend of fumed treated hydrophobic silica and metal to between 100°C - 1000°C and depositing the blended composition on the substrate.

Suitably a sand mill, pebble mill or steel ball horizontal mill may be used to blend treated silica and resin, metal, solvent blend or aqueous dispersion.

A coating formulation may be deposited by being sprayed or painted onto the substrate.

Alternatively the composition may be electrostatically deposited onto the substrate.

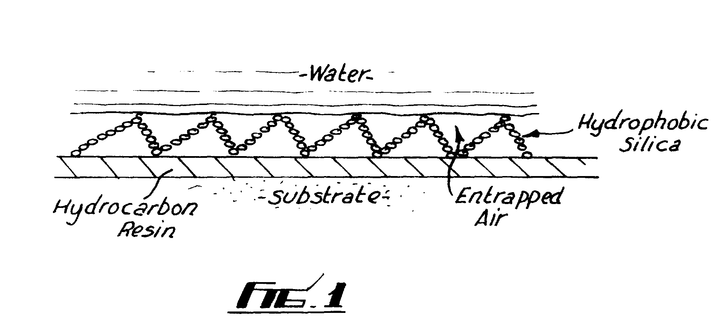

The choice of micro-particles, resin or metal and the treatment will depend on the substrate to be coated, the environment in which the substrate is to be situated and the required properties in that environment. An example of a formulation according to the invention is now further described with reference to Fig 1.

In the example shown in Fig 1, the treated fumed silica is blended with the hydro-carbon resin wherein the hydro-carbon resins bonds the silica to the substrate surface.

The fumed silica in this example is the reaction product of the flame hydrolysis of a silane compound (typically a chloro or fluoro silane) which is further treated with dimethyldichlorosilane, hexamethyldisilazane or polymethylsiloxane. This treatment imparts hydrophobicity to the fumed silica. Superhydrophobicity, however, requires the synergy of the silicon water repellant and the entrapment of air or blends of the above with other silane materials.

This is illustrated in Fig 1. The hydro-carbon resin forms a surface on the substrate with the hydrophobic silica entrapping air between the substrate and the water.

A coating such as this effectively prevents the adhesion to a marine hull of the fouling bio-net without the requirement of toxic compounds leaching into the ocean, e.g. TBT, the treatment for anti-fouling currently employed.

A further advantage in the use of the coating is the reduction of hydrodynamic drag and the consequent fuel economy.

Therefore, according to the present invention, there is provided a coating formulation wherein the creation of a micro layer of air or gas or vapour phase between the substrate and aqueous or liquid phase results in improved hydro-dynamic or co-efficient of friction characteristics created between the aqueous or fluid phase and the substrate. Also, the coating prevents and controls the formation of a bio-net and has negligible ecological impact in a marine environment.

The coating also provides reduced contact or prevention of the contact of the substrate with the aqueous or fluid phase. The coating further improves the substrates overall chemical resistance to the fluid phase. The micro-layer between the fluid and the substrate will help reduce or prevent the osmosis of the fluid occurring across or through the substrate. An example of this would be the reduction or prevention of the phenomenon known as "osmotic" blistering of polyester constructed pleasure boat hulls.

The application of such a coating or surface modification to a substrate could reduce the possible formation of ice on the substrate. A typical application of this would be to reduce the build up of ice on an aeroplane wing.

## Claims

1. A formulation suitable for coating or modifying the surface of a substrate to be situated in an aqueous environment, wherein the formulation comprises from 1% to 90% fumed, treated hydrophobic silica by weight and from 1% to 90% hydro-carbon resin by weight, and wherein the formulation is capable of entrapping a micro layer of air between the substrate and the aqueous environment.

2. A formulation as claimed in Claim 1 which comprises of a structure of micro-particles.

3. A formulation as claimed in Claim 1 which comprises of semi or semi-permeable foams or membrane.

4. A formulation as claimed in Claim 1 which comprises of micro filaments.

5. A formulation as claimed in Claim 2 wherein the micro-particles are chosen from the group containing:
pyrogenic metal oxides such as fumed silica, fumed alumina, fumed caesium, fumed zirconia, fumed titania, fumed itrium, fumed chromium, fumed tin, fumed molybdenum oxides and fumed vanadium oxide; carbon black or channel black pigment particles;
finely ground inorganic or organic particles such as talc, mica, bentones, calcium carbonate, iron and lead oxides; and
precipitated particles such as precipitated silicon dioxide, silica, aluminium silicates and titanium dioxides, silica based particles such as hydrogels, solgels or aerogels, and synthetic resin based particulate products such as Pergopack.

6. A formulation as claimed in any one of the preceding Claims treated with agents chosen from the group comprising natural and synthetic waxes, siloxanes, fluoro-silanes, reactive silanes, silicon oils, organo-silanes, organo-titaniate compounds, other silicon and hydrocarbon based materials or blends of the above.

7. A process for coating a substrate, the process comprising the steps of heating a formulation as claimed in any one of Claims 1 to 6 to between 50°C - 300°C and depositing the composition on to the substrate.

8. A process for coating a substrate, the process comprising the steps of preheating the substrate and depositing a formulation as claimed in any one of Claims 1 to 6 on to the substrate.

9. A process for coating a substrate with a metallised coating, the process comprising heating a blend of fumed treated hydrophobic silica and metal to between 100°C - 1000°C and depositing the blended composition on the substrate.

## Patentansprüche

1. Eine Zusammensetzung, die sich zur Beschichtung oder Veränderung der Oberfläche eines in wäßriger Umgebung anzubringenden Substrats eignet, wobei die Zusammensetzung aus 1 bis 90 Gew.-% geräuchertem, aufbereitetem hydrophobem Siliziumdioxid und 1 bis 90 Gew.-% Kohlenwasserstoffharz besteht, und wobei die Zusammensetzung eine Mikroluftschicht zwischen dem Substrat und der wäßrigen Umgebung einschließen kann.

2. Zusammensetzung gemäß Anspruch 1, die aus einer Mikroteilchenstruktur besteht.

3. Zusammensetzung gemäß Anspruch 1, die aus durchlässigen oder halb-durchlässigen Schäumen oder einer Membran besteht.

4. Zusammensetzung gemäß Anspruch 1, die Mikrofilamente beinhaltet.

5. Zusammensetzung gemäß Anspruch 2, wobei die Mikroteilchen aus einer Gruppe ausgewählt werden, die folgende Substanzen enthält:
pyrogene Metalloxide wie geräuchertes Siliziumdioxid, geräuchertes Aluminiumoxid, geräuchertes Cäsium, geräuchertes Zirkonium(IV)-oxid, geräuchertes Titan(IV)-oxid, geräuchertes Itrium, geräuchertes Chrom, geräuchertes Zinn, geräucherte Molybdänoxide und geräuchertes Vanadiumoxid; rußschwarze oder Kanalruß-Pigmentteilchen;
fein zerkleinerte anorganische oder organische Teilchen wie Talk, Mika, Bentone, Calciumcarbonat, Eisen und Bleioxide; und
präzipitierte Teilchen wie präzipitiertes Silizium(IV)-oxid, Siliziumdioxid, Aluminiumsilicate und Titandioxide, Teilchen auf Siliziumdioxidbasis wie Hydrogele, Sol-Gele oder Aerogele und Teilchenprodukte auf Basis von synthetischen Harzen wie Pergopack.

6. Zusammensetzung gemäß einem der vorhergehenden Ansprüche, die mit Mitteln behandelt wird, die aus der Gruppe ausgewählt werden, die aus natürlichen und synthetischen Wachsen, Siloxanen, Fluorosilanen, reaktiven Silanen, Siliziumölen, Organosilanen, Organotitaniatverbindungen, anderen Materialen auf Silizium- und Kohlenwasserstoffbasis oder Mischungen der obenerwähnten besteht.

7. Ein Verfahren zur Beschichtung eines Substrats, wobei das Verfahren aus einer Phase besteht, in der eine Zusammensetzung gemäß einem der Ansprüche 1 bis 6 auf 50 bis 300 °C erhitzt wird und aus einer Phase, in der die Zusammensetzung auf das Substrat abgeschieden wird.

8. Verfahren zur Beschichtung eines Substrats, wobei das Verfahren aus einer Phase besteht, in der das Substrat vorerhitzt wird und einer Phase, in der eine Zusammensetzung gemäß einem der Ansprüche 1 bis 6 auf das Substrat abgeschieden wird.

9. Verfahren zur Beschichtung eines Substrats mit einer metallischen Beschichtung, wobei das Verfahren daraus besteht, eine Mischung aus geräuchertem, aufbereitetem, hydrophobem Siliziumdioxid und Metall auf 100 bis 1000 °C zu erhitzen und die vermischte Zusammensetzung auf das Substrat abzuscheiden.

## Revendications

1. Une formulation appropriée pour le revêtement ou la modification de la surface d'un substrat à placer dans un environnement aqueux, dans laquelle la formulation contient de 1% à 90% en poids de poudre de silice hydrophobe ultrafine traitée et de 1% à 90% en poids de résine d'hydrocarbures, et dans laquelle la formulation est capable de piéger une microcouche d'air entre le substrat et l'environnement aqueux.

2. Une formulation selon la revendication 1 qui est composée d'une structure de microparticules.

3. Une formulation selon la revendication 1 qui est composée de mousses perméables ou semi-perméables ou membrane.

4. Une formulation selon la revendication 1 qui est composée de microfilaments.

5. Une formulation selon la revendication 2 dans laquelle les microparticules sont choisies parmi le groupe comprenant :
des oxydes de métal pyrogènes tels que de la poudre de silice ultrafine, de la poudre d'alumine ultrafine, de la poudre de césium ultrafine, de la poudre d'oxyde de zirconium ultrafine, de la poudre d'oxyde de titanium ultrafine, de la poudre d'itrium ultrafine, de la poudre de chrome ultrafine, de la poudre d'étain ultrafine, de la poudre d'oxydes de molybdène ultrafine et de la poudre d'oxyde de vanadium ultrafine ;
des particules à pigments de noir de carbone ou de noir au tunnel ;
des particules organiques ou inorganiques finement broyées telles que du talc, du mica, des bentones, du carbonate de calcium, des oxydes de fer et de plomb ; et
des particules précipitées telles que du dioxyde de silicium, de la silice, des silicates d'aluminium et des dioxydes de titanium précipités, des particules à base de silice telles que des hydrogels, des gels de colloïde ou des aérogels, et des produits en particules à base de résine synthétique tels que du Pergopack.

6. Une formulation selon une quelconque des revendications précédentes traitée à l'aide d'agents choisis parmi le groupe composé de cires naturelles et synthétiques, de siloxanes, de fluorosilanes, de silanes réactives, d'huiles de silicium, d'organosilanes, de composés d'organotitaniate, d'autres matériaux à base de silicium et d'hydrocarbures ou des mélanges homogènes de ceux qui précèdent.

7. Un procédé de revêtement d'un substrat, le procédé comprenant les étapes de chauffage d'une formulation selon une quelconque des revendications 1 à 6 jusqu'à une température comprise entre 50°C et 300°C et de dépôt de la composition sur le substrat.

8. Un procédé de revêtement d'un substrat, le procédé comprenant les étapes de préchauffage du substrat et de dépôt d'une formulation selon une quelconque des revendications 1 à 6 sur le substrat.

9. Un procédé de revêtement d'un substrat avec un revêtement métallisé, le procédé comprenant le chauffage d'un mélange homogène de poudre de silice hydrophobe ultrafine traitée et de métal jusqu'à une température comprise entre 100°C et 1 000°C et de dépôt de la composition homogénéisée sur le substrat.
